# EUROPÄISCHE PATENTSCHRIFT

(11) **EP 1 842 506 B1**
(45) Veröffentlichungstag und Bekanntmachung des Hinweises auf die Patenterteilung: **30.07.2014**
(21) Anmeldenummer: 07007065.1
(22) Anmeldetag: 04.04.2007
(51) Int. Cl.: A61C 8/00

(54) **Zahnimplantat-System**
Dental implant system
Système d'implant dentaire

(30) Priorität: 07.04.2006 DE 102006018000
(43) Veröffentlichungstag der Anmeldung: 10.10.2007
(73) Patentinhaber: Prowital GmbH, 75446 Wiernsheim (DE)
(72) Erfinder: Scherberger, Rolf, 75417 Mühlacker (DE)
(74) Vertreter: Lindner, Michael

(56) Entgegenhaltungen:
- EP-A1- 0 473 262
- FR-A1- 2 747 031
- US-B1- 6 283 752

## Beschreibung

Die vorliegende Erfindung betrifft ein Zahnimplantat-System mit einem Implantat, das eine Bohrung mit einem Gewindeabschnitt aufweist, und einem ersten vorübergehenden Implantat-Aufbau, der mit einer in den Gewindeabschnitt eingreifenden ersten Schraube am Implantat vorübergehend befestigt wird.

Zahnimplantat-Systeme und Zahnimplantat-Aufbauten der vorgenannten Art sind allgemein bekannt, beispielsweise aus den Dokumenten FR2 747 031 A1, US 6283752 A oder EP 0 473 262 A1. Zahnimplantat-Systeme, die üblicherweise zusammen verkauft werden, bestehen aus einem Implantat, das im Kieferknochen verankert wird und in das ein Implantat-Aufbau eingeschraubt werden kann.

Auf diesen Zahnimplantat-Aufbau wird - nachdem das Implantat im Kieferknochen eingewachsen ist - die Gahnkrane aufgebracht.

Bis zur vollständigen Ausheilung des Implantats im Kieferknochen wird eine so genannte Heilkappe aufgeschraubt, die die Bohrung im Implantat abdecken soll. Zur Anfertigung einer Zahnkrone ist es zudem notwendig, dass ein Zahnabdruck erstellt wird, wobei hiefür ein so genannter Abdruckpfosten in das Implantat eingeschraubt wird.

Heilkappe und Abdruckpfosten sind folglich Implantat-Aufbauten, die nur vorübergehend eingesetzt werden, während der die Zahnkrone tragende Implantat-Aufbau permanent, d.h. langfristig, mit dem Implantat verbunden ist.

Zur Verbindung der Implantat-Aufbauten mit dem Implantat werden üblicherweise Schrauben eingesetzt, die mit einem Gewindeabschnitt in Implantat zusammenwirken.

Die Zuverlässigkeit der Schraubverbindung, insbesondere für den permanenten Implantat-Aufbau, ist von größter Wichtigkeit, da die Zahnkrone zu wackeln beginnt, wenn sich die Schraubverbindung lösen sollte. Da diese Schraube nur unter Zerstörung der Zahnkrone erreichbar ist, sollte deshalb ein Lösen der Schraubverbindung auf jeden Fall vermieden werden.

Vor diesem Hintergrund besteht die Aufgabe der vorliegenden Erfindung darin, ein Zahnimplantat-System der eingangs genannten Art so weiterzubilden, dass die Sicherheit und Zuverlässigkeit der Schraubverbindung erhöht wird. Insbesondere soll ein ungewolltes Lösen der Schraubverbindung vermieden werden.

Diese Aufgabe wird von dem eingangs genannten Zahnimplantat-System durch die Merkmale des Anspruchs 1 gelöst. Insbesondere sind der erste Implantat-Aufbau in Form einer Heilkappe und die erste Schraube zusammen so ausgelegt, dass die erste Schraube nur in den oberen Längsabschnitt des Gewindeabschllitts eingreifen kann.

D.h. mit anderen Worten, dass zum Festschrauben der vorübergehenden Implantat-Aufbauten, also der Heilkappe, Schrauben verwendet werden, die nur mit einem oberen Abschnitt des Gewindeabschnitts des Implantats zusammenwirken und damit ein größerer Längsabschnitt des Gewindes während der Ausheilphase unbenutzt bleibt.

Dem liegt die überraschende Erkenntnis zugrunde, dass das Gewinde im Implantat durch häufiges Ein- und Ausdrehen von Schrauben, die für vorübergehende Implantat-Aufbauten verwendet werden, leicht Beschädigungen erfahren kann, die eine sichere und zuverlässige Verbindung mit dem permanenten Implantat-Aufbau verhindern können.

Dadurch, dass erfingdungsgemäß nur ein oberer Abschnitt des Gewindes benutzt wird, bleibt der restliche Abschnitt unbenutzt und kann dann für die Verschraubung des permanenten Implantat-Aufbaus benutzt werden.

Insgesamt wird dadurch eine Verbesserung der Schraubverbindung und damit eine Erhöhung der Zuverlässigkeit erreicht. Da die mechanischen Belastungen auf die vorübergehenden Implantat-Aufbauten bei weitem geringer sind als bei dem perznaneunten Implantat-Aufbau, reicht die kürzere Verschraubungslänge aus, so dass durch die erfindungsgemäße Lösung keine Nachteile zu erwarten sind.

Bevorzugt werden unterschiedlich lange Schrauben für den permanenten bzw. den vorübergehenden Implantat-Aufbau verwendet. Selbstverständlich ist es jedoch auch denkbar, die Implantat-Aufbauten so auszugestalten, dass gleich lange Schrauben unterschiedlich weit in den Gewindeabschnitt des Implantats eingreifen. Entsprechende technische Ausgestaltungen sind dem Fachmann ohne weiteres ersichtlich.

Unter der Angabe "im. Wesentlichen im gesamten Längsabschnitt" ist zu verstehen, dass die Schraube mit zumindest 50 % der Länge des Gewindeabschnitts zusammenwirkt.

Unter dem Begriff "nur in einem oberen Längsabschnitt" ist im Rahmen dieser Anmeldung zu verstehen, dass die Schraube nur mit höchstens 50 % des Gewindeabschnitts (also höchstens der oberen Hälfte des Gewindeabschnitts) zusammenwirkt.

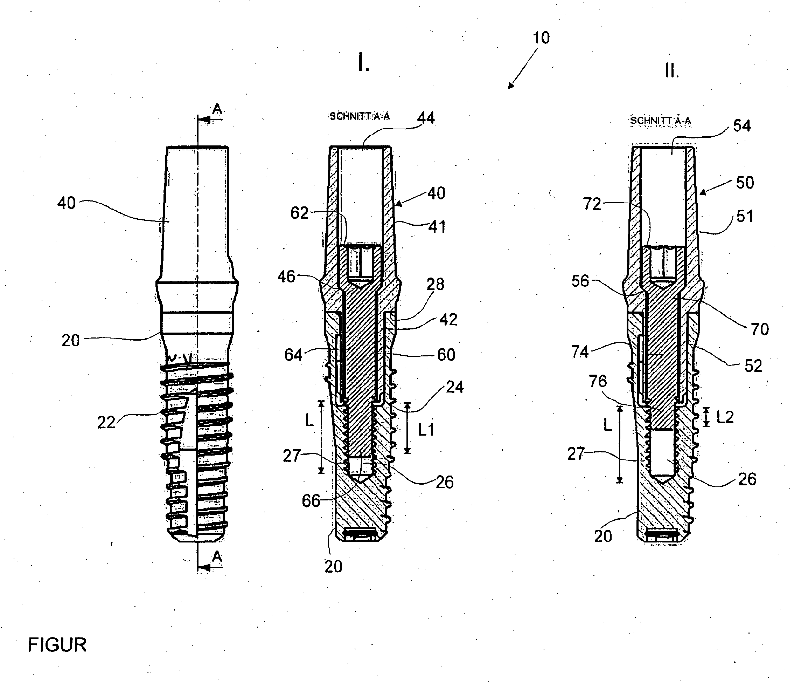

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nun anhand einer beispielhaften Ausführungsform unter Bezugnahme auf die Zeichnung näher erläutert. Dabei zeigt die einzige Figur ein Zahnimplantat-System mit einem Implantat und unterschiedlichen Implantat-Aufbauten.

In der Figur ist ein Zahnimplantat-System dargestellt und mit dem Bezugszeichen 10 gekennzeichnet. Grundsätzlich besteht ein Zahnimplantat-System aus einem Implantat, das in den Kieferknochen eines Menschen eingebracht wird, und einem Implantat-Aufbau, der mittels Schraubverbindung an dem im Kieferknochen verankerten Implantat befestigt wird. Der grundsätzliche Aufbau solcher Zahnimplantat-Systeme ist allgemein bekannt, so dass an dieser Stelle nicht weiter darauf eingegangen werden soll.

In der Figur ist das in den Kieferknochen einzubringende Implantat mit dem Bezugszeichen 20 gekennzeichnet. Es handelt sich hierbei um einen länglichen Körper, der an der Außenseite ein Gewinde 22 aufweist und im Inneren eine Bohrung 24 und eine sich in Längsrichtung daran anschließende Bohrung mit Gewinde 26 aufweist. Der Durchmesser der Bohrung mit Gewinde 26 ist geringer als der Durchmesser der Bohrung 24. Am distalen Ende des Implantats 20 wird eine Schulter 28 zwischen der Öffnung der Bohrung 24 und dem äußeren Rand des Implantats 20 gebildet.

Die weiteren Details dieses Implantats 20 sind für das Verständnis der vorliegenden Erfindung nicht von Bedeutung, so dass darauf nicht weiter eingegangen werden muss.

Aus der Figur ergibt sich noch, dass die Länge L der Bohrung 26 mit dem Bezugszeichen 27 gekennzeichnet ist und nachfolgend als Gewindeabschnitt bezeichnet wird.

Wie bereits erwähnt, dient das Implantat 20 dazu, einen Zahnimplantat-Aufbau zu befestigen. In der mit I in der Figur gekennzeichneten Ausführungsform ist der Implantat-Aufbau mit dem Bezugszeichen 40 gekennzeichnet. Es handelt sich hierbei um einen dauerhaften Implantat-Aufbau, auf den beispielsweise eine Zahnkrone aus einem keramischen Werkstoff aufgeklebt wird.

Der Implantat-Aufbau 40 besitzt eine längliche Form, die in einen oberen Längsabschnitt 41 und einen unteren Längsabschnitt 42 aufgeteilt ist. Der obere Längsabschnitt 41 besitzt einen Durchmesser, der größer ist als derjenige des unteren Längsabschnitts 42. Bedingt durch diesen Durchmesserunterschied ergibt sich eine Stufe bzw. Schulter, die auf der Schulter 28 des Implantats 20 aufliegen kann.

Der Durchmesser des unteren Längsabschnitts 42 ist kleiner als der Durchmesser der Bohrung 24 des Implantats, so dass dieser Längsabschnitt 42 in die Bohrung 24 eingebracht werden kann. Der Längsabschnitt 42 erstreckt sich dann über nahezu die gesamte Länge der Bohrung 24.

Der Implantat-Aufbau 40 ist, wie in der Figur gut zu erkennen, von einer Bohrung 44 durchsetzt, d.h. dass die Bohrung 44 durch den oberen Längsabschnitt 41 und den unteren Längsabschnitt 42 verläuft.

Der Durchmesser der Bohrung 44 verändert sich jedoch, und wird im Übergang von dem oberen Längsabschnitt 41 zum unteren Längsabschnitt 42 geringer, so dass sich eine Schulter 46 ausbildet.

Zur Befestigung des Implantat-Aufbaus 40 wird eine Schraube verwendet, die in der Darstellung I mit dem Bezugszeichen 60 gekennzeichnet ist. Diese Schraube 60 besitzt - wie üblich - einen Schraubenkopf 62, einen sich daran anschließenden Schraubenhals 64 und einen Gewindebereich 66, der sich jedoch nicht über die gesamte Länge des Schraubenhalses 64 erstrecken muss.

Das Gewinde im Gewindebereich 66 passt mit dem Gewinde der Bohrung 26 zusammen, d.h., dass u.a. der Durchmesser des Gewindebereichs 66 mit dem Durchmesser der Bohrung 26 übereinstimmt.

Aus der Figur ergibt sich des Weiteren, dass - im eingeschraubten Zustand - der Schraubenkopf 62 an der Schulter 46 des Implantat-Aufbaus 40 anschlägt, so dass dadurch eine feste Verbindung zwischen Implantat-Aufbau 40 und Implantat 20 durch Festziehen der Schraube 60 möglich ist.

In der Figur ist zudem hervorgehoben, dass die Schraube mit ihrem Gewindebereich 66 über eine Länge L1 in den Gewindeabschnitt 27 mit der Länge L eintaucht. Für den permanenten Implantat-Aufbau 40 muss die Länge L1 mindestens 50 % der Länge L des Gewindeabschnitts 27 sein, bevorzugt ist L1 jedoch mindestens 70 bis 90 % der Länge L.

Auf diese Weise wird eine sehr stabile, sichere Verschraubung erreicht, die über einen sehr langen Zeitraum hält.

Das Verhältnis der Längen L1 zu L kann entweder durch die entsprechende Schraubenlänge eingestellt werden, oder durch die Anordnung der Schulter 46 innerhalb der Bohrung 44.

In der Darstellung II ist das gleiche Implantat 20 dargestellt, so dass auf dessen Aufbau nicht weiter eingegangen werden muss. Im Gegensatz zu der Darstellung I wird jedoch ein Zahnimplantat-Aufbau verwendet, der nur vorübergehend eingesetzt wird. Dieser Implantat-Aufbau ist mit dem Bezugszeichen 50 gekennzeichnet.

Solche vorübergehenden Implantat-Aufbauten sind beispielsweise Heilkappen oder Abdruckpfosten. Wie bereits zuvor ausgeführt, muss das Implantat 20 vor dem Einsetzen des permanenten Implantat-Aufbaus 40 zunächst richtig in den Kieferknochen einwachsen. In dieser Phase wird die Bohrung 24 des Implantats 20 mit einer so genannten Heilkappe abgedeckt. Bei der Heilkappe handelt es sich um ein Bauteil, das auf der Schulter 28 des Implantats 20 aufliegt und mit einer Schraube am Implantat 20 befestigt wird. Kappe und Schraube sind erfindungsgemäß einstückig ausgebildet.

Darüber hinaus muss bis zum Einsatz eines permanenten Implantat-Aufbaus 40 ein Abdruck des Kiefers gemacht werden, um die Zahnkrone fertigen zu können. Hierfür wird in das Implantat ein so genannter Abdruckpfosten eingesetzt, dessen Aufbau weitgehend gleich zu dem in der Darstellung I gezeigten permanenten Implantat-Aufbau 40 ist.

Ein solcher Abdruckpfosten ist in der Darstellung II gezeigt und mit dem Bezugszeichen 50 gekennzeichnet. Wie bereits erwähnt, entspricht dessen Form weitgehend der Form des zuvor erläuterten Implantat-Aufbaus 40, so dass nicht weiter auf die einzelnen Merkmale eingegangen werden muss. Grundsätzlich besteht der vorübergehende Implantat-Aufbau 50 aus einem oberen Längsabschnitt 51 und einem unteren Längsabschnitt 52, der in die Bohrung 24 des Implantats 20 eingesteckt wird. Der Implantat-Aufbau 50 ist von einer Bohrung 54 durchsetzt, so dass er ebenfalls über eine Schraube, die mit dem Bezugszeichen 70 gekennzeichnet ist, im Implantat 20 vorübergehend befestigt werden kann. Die Schraube 70 weist ebenfalls einen Schraubenkopf 72, einen Schraubenhals 74 und einen Gewindebereich 76 auf. Im Unterschied zu der Schraube 60 wirkt der Gewindebereich 76 der Schraube 70 nur über eine Länge L2 des Gewindeabschnitts 27 mit der Bohrung 26 zusammen. Aus der Darstellung ergibt sich bereits, dass diese Länge L2 deutlich geringer ist als die Länge L1. Die Länge L2 wird so gewählt, dass sie nicht mehr als 50 % der Gesamtlänge L des Gewindeabschnitts 27 beträgt. Vorzugsweise ist die Länge L2 etwa 20 bis 40 % der Länge L.

Damit wirkt die Schraube 70 für den vorübergehenden Implantat-Aufbau 50 nur mit einem oberen Bereich L2 des Gewindeabschnitts 27 (der Länge L) zusammen, während die Schraube 60 für den permanenten Implantat-Aufbau 40 mit einem sehr viel größeren Bereich (Länge L1) des Gewindeabschnitts 27 zusammenwirkt.

Diese Ausgestaltung dient dazu, den unteren Bereich des Gewindeabschnitts 27 bis zum Einsetzen des permanenten Implantat-Aufbaus 40 zu schonen. D.h., dass der untere Gewindeabschnitt beim Einsetzen der vorübergehenden Implantat-Aufbauten von den Schrauben 70 zur Befestigung nicht erreicht wird.

Dies hat den Vorteil, dass dieser Gewindeabschnitt nicht durch das mehrmalige Ein- und Ausschrauben beschädigt wird, so dass keine Beeinträchtigung der Schraubverbindung für den permanenten Implantat-Aufbau eintritt.

Die Verschraubung des permanenten Implantat-Aufbaus 40 wird auf diese Weise deutlich zuverlässiger und langlebiger, so dass ein unerwünschtes Lösen der Verschraubung vermieden werden kann.

Am Ende sei noch darauf hingewiesen, dass in dem gezeigten Ausführungsbeispiel die Längen L1 und L2 für den permanenten und den vorübergehenden Implantat-Aufbau durch entsprechende Wahl der Längen der beiden Schrauben 60 und 70 eingestellt werden. Für den Fachmann ist jedoch klar, dass die beiden Längen L1 und L2, in denen die Schrauben mit dem Gewindeabschnitt zusammenwirken, auch auf andere Art und Weise erreicht werden können.

## Patentansprüche

1. Zahnimplantat-System mit
einem Implantat (20), das eine Bohrung (24) mit einem Gewindeabschnitt (26, 27) und eine Schulter (28) aufweist,
einem ersten vorübergehenden als Heilkappe ausgebildeten Implantat-Aufbau (50), der mit einer in den Gewindeabschnitt (27) eingreifenden ersten Schraube (70) am Implantat (20) vorübergehend befestigbat ist, wobei erste Schraube und Heilkappe einstückig ausgebildet sind und die Heilkappe -im befestigten Zustand- auf der Schulter (28) des Implantats (20) aufliegt, und
einem zweiten permanenten Implantat-Aufbau. (40), der mit einer in den Gewindeabschnitt (27, L) eingreifenden zweiten Schraube (60) am Implantat (20) permanent befestigbar ist,
wobei
der erste Implantat-Aufbau (50) und die erste Schraube (70) zusammen so ausgelegt sind, dass die erste Schraube (70) nur in den oberen Längsabschnitt (L2) des Gewindeabschnitts (27) eingreifen kann, so dass die erste Schraube nur mit höchstens 50% des Gewindeabschnitts zusammenwirkt, und
der zweite Implantat-Aufbau (40) und die zweite Schraube (60) zusammen so ausgelegt sind, dass die zweite Schraube (60) im Wesentlichen in den gesamten Längsabschnitt (L1) des Gewindeabschnitts (27) eingreifen kann, so dass die zweite Schraube mit zumindest 50% des Gewindeabschnitts zusammenwirkt.

2. Implantat-System nach Anspruch 1, **dadurch gekennzeichnet, dass** die erste und die zweite Schraube (60, 70) unterschiedliche Längen aufweisen.

3. Implantat-System nach Anspruch 1, **dadurch gekennzeichnet, dass** die erste und die zweite Schraube (60, 70) im Wesentlichen gleich lang ausgebildet sind, und der erste und der zweite Implantat-Aufbau (40, 50) so ausgelegt sind, dass die erste bzw. die zweite Schraube (60, 70) entsprechend weit in den Gewindeabschnitt (26, 27) eindrehbar sind.

## Claims

1. A tooth implant system comprising
an implant (20) having a bore (24) with a threaded portion (26, 27) and a shoulder (28),
a first temporary implant structure (50) formed as a healing cap, the implant structure being temporarily attachable at the implant (20) by means of a first screw (70) engaging the threaded portion (27), wherein the first screw and the healing cap are formed as a single piece and the healing cap abuts the shoulder (28) of the implant (20) in the engaged in the engaged state, and
a second permanent implant structure (40) which is permanently attachable at the implant (20) by means of a second screw (60) engaging the threaded portion (27, L), wherein
the first implant structure (50) and the first screw (70) together are adapted so that the first screw (70) can only engage the upper longitudinal portion (L2) of the threaded portion (27) so that the first screw engages not more than 50% of the threaded portion, and
the second implant structure (40) and the second screw (60) together are adapted so that the second screw (60) can engage substantially the whole longitudinal portion (L1) of the threaded portion so that the second screw engages more than 50% of the threaded portion.

2. The tooth implant system of claim 1, **characterized in that** the first and second screws (60, 70) have different lengths.

3. The tooth implant system of claim 1, **characterized in that** the first and second screws (60, 70) are formed having substantially the same length, and the first and second implant structures (40, 50) are adapted so that the first and second screws (60, 70), respectively, are screwable into the threaded portion correspondingly far.

## Revendications

1. Système d'implant dentaire, comprenant
un implant (20), qui présente un alésage (24) avec une portion filetée (26, 27) et un épaulement (28),
une première structure d'implant (50) réalisée temporairement sous forme de capuchon de cicatrisation, qui peut être fixée temporairement sur l'implant (20) avec une première vis (70) s'engageant dans la portion filetée (27), la première vis et le capuchon de cicatrisation étant réalisés d'une seule pièce et le capuchon de cicatrisation - dans l'état fixé - reposant sur l'épaulement (28) de l'implant (20), et
une deuxième structure d'implant permanente (40), qui peut être fixée de manière permanente sur l'implant (20) avec une deuxième vis (60) s'engageant dans la portion filetée (27, L),
la première structure d'implant (50) et la première vis (70) étant conçues ensemble de telle sorte que la première vis (70) ne puisse s'engager que dans la portion longitudinale supérieure (L2) de la portion filetée (27), de telle sorte que la première vis coopère seulement avec 50 % au maximum de la portion filetée, et
la deuxième structure d'implant (40) et la deuxième vis (60) étant conçues ensemble de telle sorte que la deuxième vis (60) puisse s'engager essentiellement dans toute la portion longitudinale (L1) de la portion filetée (27), de telle sorte que la deuxième vis coopère avec au moins 50 % de la portion filetée.

2. Système d'implant selon la revendication 1, **caractérisé en ce que** la première et la deuxième vis (60, 70) présentent des longueurs différentes.

3. Système d'implant selon la revendication 1, **caractérisé en ce que** la première et la deuxième vis (60, 70) sont réalisées essentiellement avec la même longueur, et la première et la deuxième structure d'implant (40, 50) sont conçues de telle sorte que la première ou la deuxième vis (60, 70) puissent être vissées à la profondeur correspondante dans la portion filetée (26, 27).
